# EUROPÄISCHE PATENTANMELDUNG

(11) **EP 4 066 915 A1**
(43) Veröffentlichungstag der Anmeldung: **05.10.2022**
(21) Anmeldenummer: 21165914.9
(22) Anmeldetag: 30.03.2021
(51) Int. Cl.: B01D 29/11, B01D 29/33, B01D 35/30

(54) **FILTERGEHÄUSE, FILTER UND FILTERSYSTEM**

(71) Anmelder: Riva Systemtechnik GmbH, 78554 Aldingen (DE)
(72) Erfinder: Die Erfindernennung liegt noch nicht vor
(74) Vertreter: Westphal, Mussgnug & Partner Patentanwälte mbB

(57) **Zusammenfassung**

Die vorliegende Erfindung betrifft ein Filtergehäuse (2) mit einer Längsachse (X) und einem Innenraum (20) für einen Filter (5), aufweisend ein erstes Gehäuseteil (21) und ein zweites Gehäuseteil (22), einen Einlass (10) und einen Auslass (11), wobei das erste Gehäuseteil (21) und das zweite Gehäuseteil (22) lösbar und flüssigkeitsdicht miteinander verbindbar sind, wobei der Innenraum (20) den Einlass (10) und den Auslass (11) verbindet, und wobei das erste Gehäuseteil (21) und/oder das zweite Gehäuseteil (22) aus einem biologisch abbaubaren Kunststoff hergestellt ist. Darüber hinaus betrifft die vorliegende Erfindung einen Filter (5) und ein Filtersystem (1).

## Beschreibung

Die vorliegende Erfindung betrifft ein Filtergehäuse mit den Merkmalen des Patentanspruchs 1, einen Filter mit den Merkmalen des Patentanspruchs 10 sowie ein Filtersystem mit den Merkmalen des Patentanspruchs 17.

Filtergehäuse sind aus dem Stand der Technik in unterschiedlichen Ausgestaltungen vorbekannt und dienen der Aufnahme eines Filters. Filtergehäuse weisen typischerweise einen Einlass, einen Auslass und einen Innenraum auf, wobei das Filtergehäuse über den Einlass und den Auslass mit einem Leistungssystem verbunden werden können. In dem Innenraum wird zwischen dem Einlass und dem Auslass ein Filter derart positioniert, dass das Medium, das durch den Einlass in den Innenraum eingebracht wird, durch den Filter hindurchfließen muss, um zu dem Auslass zu gelangen.

Derartige Filtergehäuse werden im Stand der Technik vielseitig verwendet, wobei eine der typischen Anwendungen ist Filtergehäuse in einer Trinkwasserleitung anzuordnen, um mittels des Filters ungewünschte Verunreinigungen oder Additive herauszufiltern. Hierzu werden im Stand der Technik verbreitet Aktivkohlefilter verwendet, die sich zur Aufbereitung des Mediums bewährt haben, jedoch setzt mit der Benutzung über die Zeit eine Sättigung des Filters ein, welches ein regelmäßiges Wechseln des Filters erforderlich macht.

Als weiterer Nachteil bekannter Filtergehäuse und Filter ist zu nennen, dass bekannte Filtergehäuse sowie Filter aus Kunststoff hergestellt sind oder einen nennenswerten Anteil an Kunststoff aufweisen. Kunststoff ist einerseits aufwändig zu recyceln und andererseits stehen einige Kunststoffe im Verdacht, über die Zeit Weichmacher auszuscheiden, was zu einer Verunreinigung des Mediums führen kann.

Ausgehend von diesem Stand der Technik ist es die Aufgabe der vorliegenden Erfindung, ein in zweckmäßigerweise verbessertes Filtergehäuse, einen Filter sowie ein Filtersystem mit einem Filtergehäuse und einem Filter vorzuschlagen. Das Filtergehäuse, der Filter sowie das Filtersystem sollen ein verbessertes Recycling ermöglichen, zur Müllreduzierung beitragen und eine anspruchsvolle Reinigung des Mediums, insbesondere Wasser bzw. Trinkwasser, ermöglichen.

Diese Aufgaben werden durch ein Filtergehäuse mit den Merkmalen des Patentanspruchs 1, einen Filter mit den Merkmalen des Patentanspruchs 10 sowie einen Filtersystem mit den Merkmalen des Patentanspruchs 17 gelöst.

Weitere vorteilhafte Ausgestaltungen der vorliegenden Erfindung werden in den Ansprüchen angegeben.

Das erfindungsgemäße Filtergehäuse mit den Merkmalen des Patentanspruchs 1 weist einen Innenraum für einen Filter und eine Längsachse auf, wobei das Filtergehäuse weiterhin ein erstes Gehäuseteil, ein zweites Gehäuseteil, einen Einlass und einen Auslass aufweist. Das erste Gehäuseteil und das zweite Gehäuseteil sind lösbar und flüssigkeitsdicht miteinander verbindbar. Der Innenraum verbindet den Einlass mit dem Auslass. Erfindungsgemäß sind bzw. ist das erste Gehäuseteil und/oder das zweite Gehäuseteil aus einem, vorzugsweise mit natürlichen Fasern verstärkten, biologisch abbaubaren Kunststoff hergestellt.

Der biologisch abbaubare Kunststoff gemäß der vorliegenden Erfindung kann einen Anteil nachwachsender Rohstoffe von mindestens 60 %, vorzugsweise 100 %, aufweisen und kann ferner eine Zusammensetzung aus Polyhydroxyalkanoate, Polycaprolactone, Polyester, Polylactide, umgangssprachlich auch Polymilchsäuren oder kurz PLA genannt, Lignin, Stärke, Cellulose umfassen. Weiterhin können organische Additive hinzugefügt werden, wie beispielsweise Mineralien, natürliches Wachs oder Fasern. Wesentlich dabei ist gemäß der vorliegenden Erfindung, dass der verwendete Kunststoff biologisch abbaubar ist. Derartige biologisch abbaubare Kunststoffe sind bevorzugter Weise frei von bedenklichen Stoffen wie Weichmachern, Schwermetallen o.Ä, weshalb die Verwendung dieser Kunststoffe für die Aufbereitung eines Medium, insbesondere Wasser bzw. Trinkwasser, höchsten Ansprüchen gerecht wird und keine der unbedenklichen Stoffe freigesetzt werden können.

Eine Weiterbildung der vorliegenden Erfindung sieht vor, dass das erste Gehäuseteil und das zweite Gehäuseteil durch eine um die Längsachse ausgebildete Schraubverbindung lösbar miteinander verbindbar sind, wobei in dem ersten Gehäuseteil ein erster Gewindeabschnitt und in dem zweiten Gehäuseteil ein mit dem ersten Gewindeabschnitt korrespondierender zweiter Gewindeabschnitt ausgebildet ist. Durch die Schraubverbindung kann das Filtergehäuse zum Wechseln des Filters - bevorzugt werkzeuglos - geöffnet werden.

Der erste Gewindeabschnitt und/oder der zweite Gewindeabschnitt sind nach Maßgabe einer bevorzugten Weiterbildung der vorliegenden Erfindung segmentiert. Der Gewindeabschnitt weist mindestens einen Gewindegang, vorzugsweise mehrere Gewindegänge auf. Der mindestens eine Gewindegang weist in einer Umlaufrichtung um die Gewindeachse des jeweiligen Gewindeabschnitts, welche vorzugsweise ebenfalls der Längsachse entspricht, mindestens eine Unterbrechung auf. Die Unterbrechung kann vorzugsweise parallel zur der Gewindeachse ausgebildet sein und den jeweiligen Gewindeabschnitt in der Richtung der Gewindeachse vollständig unterbrechen. Die Unterbrechung kann eine Mantelfläche umfassen, deren Durchmesser einem Kerndurchmesser entspricht, oder zu dem Kerndurchmesser zurückversetzt ist. Der erste Gewindeabschnitt und/oder der zweite Gewindeabschnitt können bevorzugter Weise durch ein Spritzgießverfahren hergestellt werden, wobei der segmentierte erste Gewindeabschnitt und/oder der zweite Gewindeabschnitt durch ein Faltkern-Spritzgussverfahren hergestellt werden können bzw. kann.

Darüber hinaus hat es sich als vorteilhaft erwiesen, wenn in der Längsachse beidseitig zu dem ersten Gewindeabschnitt jeweils ein erster Dichtungsabschnitt und/oder in der Längsachse beidseitig dem zweiten Gewindeabschnitt jeweils ein zweiter Dichtungsabschnitt vorgesehen ist. Die Schraubverbindung wird somit beidseitig abgedichtet.

Gemäß einer vorteilhaften Ausgestaltung der vorliegenden Erfindung umfasst einer der ersten Dichtungsabschnitte des ersten Gehäuseteils und/oder einer der zweiten Dichtungsabschnitte des zweiten Gehäuseteils eine Dichtringanordnung. Die Dichtringanordnung kann aus einer in das erste Gehäuseteil oder das zweite Gehäuseteil eingeformte oder eingearbeitete Dichtungsnut gebildet sein, in die ein Dichtring eingesetzt ist. Dichtringanordnungen sind hinreichend bekannt und ermöglichen einen einfachen Tausch der verschleißbehafteten Dichtringe.

Weiterhin hat es sich als vorteilhaft erwiesen, wenn die ersten Dichtungsabschnitte zu dem ersten Gewindeabschnitt und/oder die zweiten Dichtungsabschnitte zu dem Gewindeabschnitt abgesetzt angeordnet sind. Durch die abgesetzte oder stufen- bzw. treppenartige Anordnung der Dichtungsabschnitte mit den jeweiligen Gewindeabschnitten sind die Dichtringe versetzt zu jeweiligen Gewindeabschnitten angeordnet. Die Dichtungsabschnitte können beim Zusammensetzen des ersten Gehäuseteils und des zweiten Gehäuseteils nicht mit dem korrespondierenden Gewindeabschnitt in Kontakt kommen, wodurch eine Beschädigung der Dichtabschnitte, insbesondere der Dichtringe der Dichtringanordnung, verhindert werden kann.

Nach Maßgabe einer vorteilhaften Weiterbildung der Erfindung sind bzw. ist das erste Gehäuseteil und/oder das zweite Gehäuseteil topfförmig mit einem Boden und einer von dem Boden in der Längsachse abstehenden Wandung ausgebildet. Das erste Gehäuseteil und/oder das zweite Gehäuseteil können bevorzugt in einem Spritzgießverfahren hergestellt werden und weisen hierzu mindestens einen Angusspunkt auf.

Weiterhin hat es sich als vorteilhaft erwiesen, wenn das ersten Gehäuseteil oder das zweite Gehäuseteil den Einlass und den Auslass aufweist. Sowohl der Einlass, als auch der Auslass sind bevorzugt an dem ersten Gehäuseteil oder dem zweiten Gehäuseteil ausgebildet, wodurch es möglich ist, dass zum Wechsel des Filters das jeweilige Gehäuseteil mit den Leitungen, die das Medium zu dem Innenraum des Filtergehäuses zu- bzw. ableiten, verbunden bleiben kann.

Weiterhin hat es sich als vorteilhaft erwiesen, wenn an dem ersten Gehäuseteil an dem Boden der Auslass und an der Wandung der Einlass angeordnet ist, oder vice versa.

Auch hat es sich als vorteilhaft erwiesen, wenn zwischen dem Boden und dem Einlass die Wandung einen Zylinderabschnitt und/oder einen Kegelabschnitt aufweist. Durch den Zylinderabschnitt und/oder den Kegelabschnitt sind der Auslass und der Einlass zueinander beabstandet angeordnet. Der Zylinderabschnitt kann ferner gemäß einer bevorzugten Weiterbildung einen Dichtungsabschnitt für eine Dichtung des Filters ausbilden. Der Kegelabschnitt kann eine Zentrierung des Filters beim Einsetzen in das erste Gehäuseteil bilden und kann darüber hinaus eine Querschnittserweiterung ausbilden, durch die das Medium von dem Filter zu dem Auslass druckverlustarm geführt werden kann.

Ein weiterer Aspekt der vorliegenden Erfindung betrifft einen Filter für ein Filtergehäuse, insbesondere für ein zuvor beschriebenes Filtergehäuse. Der Filter weist einen Filterkörper und ein erstes Halteteil auf. Das erste Halteteil bildet eine Filteröffnung aus und ist lösbar mit dem Filterkörper verbunden. Erfindungsgemäß ist vorgesehen, dass das erste Halteteil aus einem biologisch abbaubaren Kunststoff hergestellt ist. Die Filteröffnung kann das gefilterte Medium, insbesondere Wasser oder Trinkwasser, durch das erste Halteteil aus dem Filter zu dem Auslass führen.

Der Filterkörper des Filters ist konfiguriert, Schadstoffe, Medikamentenrückstände, Schwermetalle, Pestizide, Mikroplastik, Viren, Pilze, Algen usw. aus dem Medium herauszufiltern. Sobald der Filter gesättigt ist, sollte dieser ersetzt werden. Gegenüber den aus dem Stand der Technik bekannten Filtern ist die Verbindung zwischen dem Filterkörper und dem Halteteil keine Klebeverbindung. Die Verbindung kann gelöst werden und ebengleich wieder hergestellt werden. Der Filterkörper und das erste Halteteil können getrennt entsorgt bzw. recycelt werden.

Eine bevorzugte Weiterbildung der vorliegenden Erfindung sieht vor, dass ein aus einem biologisch abbaubaren Kunststoff hergestelltes zweites Halteteil vorgesehen ist, und dass der Filterkörper zwischen dem ersten Halteteil und dem zweiten Halteteil lösbar angeordnet gehalten ist.

Es hat sich ebenso vorteilhaft gezeigt, wenn der Filterkörper mittels einer kraftschlüssigen Verbindung bzw. mittels einer Klemmverbindung an dem ersten Halteteil und an dem zweiten Halteteil gehalten ist. Es hat sich gezeigt, dass eine Klemmverbindung zwischen dem ersten Halteteil und dem Filterkörper oder zwischen dem zweiten Halteteil und dem Filterkörper eine ausreichende Dichtwirkung bereitstellt, damit das Medium, vorzugsweise Wasser, insbesondere Trinkwasser, vollständig durch den Filter gezwungen wird und nicht durch einen "Bypass" zwischen dem jeweiligen Halteteil und dem Filterkörper fließen kann.

Bevorzugter Weise ist der Filterkörper ein hohlzylindrischer Zylinderfilter. Der Zylinderfilter weist eine - vorzugsweise zentrische - Durchbrechung, zwei Stirnseiten eine äußere Mantelfläche auf, wobei bevorzugt das zu filternde Medium ausgehend von der äußeren Mantelfläche hin zur Durchbrechung den Filterkörper durchströmt. Die Filteröffnung wird durch das erste Halteteil gebildet und führt das gefilterte Medium zu dem Auslass.

Eine bevorzugte Weiterbildung des Filters sieht vor, dass mindestens eine Dichtung zwischen dem ersten Halteteil und dem Filterkörper und/oder zwischen dem zweiten Halteteil und dem Filterkörper vorgesehen ist. Bevorzugt wird die Dichtung durch einen Dichtring, insbesondere einen O-Ring, ausgebildet sein. Der Dichtring kann die Klemmverbindung bzw. den Kraftschluss zwischen dem entsprechenden Halteteil und dem Filterkörper bewerkstelligen und weiterhin nach der Sättigung des Filters und einer Trennung des ersten Halteteils und/oder des zweiten Halteteils von dem Filterkörper abgenommen werden und getrennt entsorgt bzw. recycelt werden.

Das erste Halteteil und/oder das zweite Halteteil weist nach Maßgabe einer bevorzugten Weiterbildung einen Flanschabschnitt und einen Bolzenabschnitt auf. Der jeweilige Flanschabschnitt ist konfiguriert, auf einer der Stirnseiten des Filterkörpers anzuliegen, währenddessen der Bolzenabschnitt konfiguriert ist, in die Durchbrechung des Filterkörpers zu ragen.

Bevorzugt weist das erste Halteteil zwei, vorzugsweise drei Dichtungen oder mehrere Dichtungen auf. Mindestens eine Dichtung, vorzugsweise zwei Dichtungen sind an dem Bolzenabschnitt angeordnet. Weiterhin ist eine Dichtung an einer Mantelaußenfläche des Flanschabschnitts angeordnet. Diese Dichtung ist konfiguriert, mit der Wandung des ersten Gehäuseteils oder des zweiten Gehäuseteils zusammenzuwirken, um das zu filternde Medium von dem Einlass des Filtergehäuses durch den Filtereinlass und durch den Filterkörper zu dem Auslass des Gehäuses zu zwingen. Weitere Dichtungen können auf der von dem Filterkörper abgewandten Seite des Flansches angeordnet sein.

Darüber hinaus hat es sich als vorteilhaft erwiesen, wenn der Filtereinlass den Bolzenabschnitt des ersten Halteteils durchbricht und der Filtereinlass in der Durchbrechung des Filterkörpers mündet. Das erste Halteteil und das zweite Halteteil sind auf gegenüberliegenden Seiten des Filterkörpers angeordnet. Das zweite Halteteil verschließt vorzugsweise die Durchbrechung des Filterkörpers auf der dem ersten Halteteil gegenüber liegenden Stirnseite des Filterkörpers.

Weiterhin ist der Filterkörper vorzugsweise aus Block-Aktivkohle.

Ein weiterer Aspekt der vorliegenden Erfindung betrifft ein Filtersystem mit einem Filtergehäuse und einem zuvor beschriebenen Filter, wobei der Filter in dem Innenraum zwischen dem Einlass und dem Auslass und zwischen dem ersten Gehäuseteil und dem zweiten Gehäuseteil derart geklemmt gehalten ist. Bevorzugt wird der Filter in dem Innenraum des Filtergehäuses derart gehalten, dass das zu fördernde Medium durch den Filterkörper zwangsgeführt wird.

Nachfolgend wird unter Bezugnahme auf die begleitende Zeichnung ein Ausführungsbeispiel des Filtersystems, des Filters und des Filtergehäuses im Detail beschrieben:

Es zeigen:
- Figur 1: eine perspektivische Darstellung eines erfindungsgemäßen Filtersystems mit einem Filtergehäuse mit einem Einlass und einem Auslass, welches aus einem ersten Gehäuseteil und einem zweiten Gehäuseteil gebildet ist,
- Figur 2: eine Schnittdarstellung des Filtersystems gemäß Figur 1, wobei in einem Innenraum des Filtergehäuses ein wechselbarer Filter zwischen dem Einlass und dem Auslass angeordnet ist und
- Figur 3: eine perspektivische Ansicht des zweiten Gehäuseteils des Filtersystems gemäß Figur 1.

Nachfolgend werden gleiche oder funktional gleiche Bauteile mit gleichen Bezugszeichen gekennzeichnet. Der Übersichtlichkeit halber sind in den einzelnen Figuren nicht alle gleichen oder funktional gleichen Teile mit einer Bezugsziffer versehen.

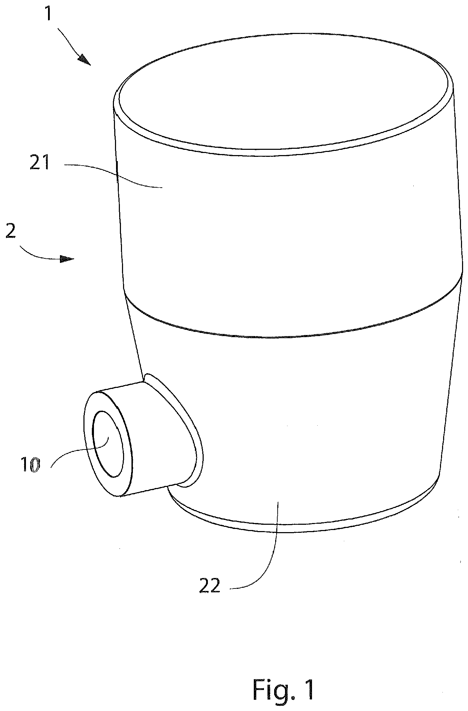

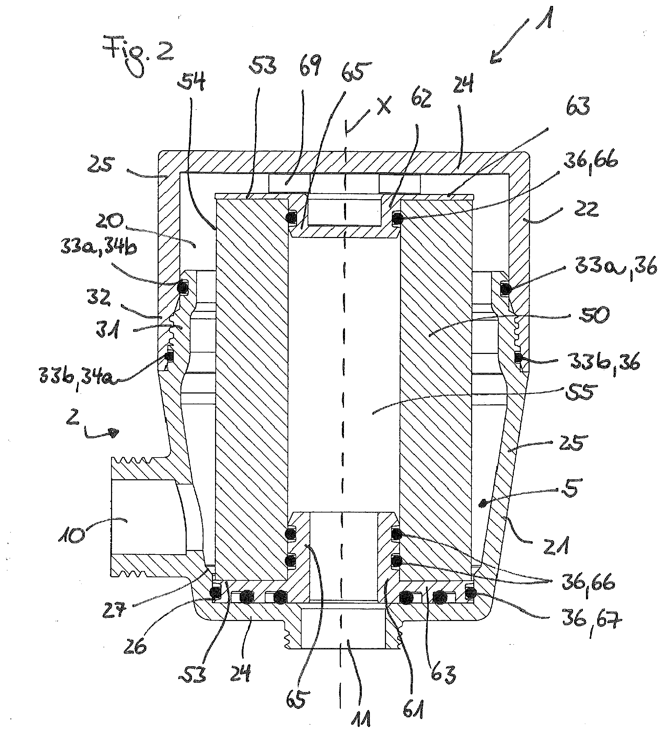

Figur 1 zeigt eine perspektivische Darstellung eines Filtersystems 1, aufweisend ein Filtergehäuse 2 mit einem Innenraum 20, in dem ein in Figur 2 gezeigter Filter 5 angeordnet ist. Das Filtergehäuse 2 erstreckt sich entlang einer Längsachse X.

Das Filtergehäuse 2 umfasst ein erstes Gehäuseteil 21 und ein zweites Gehäuseteil 22, einen Einlass 10 und einen Auslass 11. Der Einlass 10 und der Auslass 11 sind über den Innenraum 20 miteinander verbunden. Durch den Einlass 10 kann ein Medium, insbesondere Wasser, vorzugsweise Trinkwasser, in den Innenraum 20 eingeleitet werden und durch den Auslass 11 wieder ausströmen. Der Einlass 10 und der Auslass 11 können Verbindungsmittel, beispielsweise Außengewinde, aufweisen, durch die das Filtergehäuse 2 an ein Leitungssystem angeschlossen werden kann.

Das erste Gehäuseteil 21 und das zweite Gehäuseteil 22 sind aus einem biologisch abbaubaren Kunststoff hergestellt. Der biologisch abbaubare Kunststoff kann in einer bevorzugten Ausgestaltung mindestens aus 60 %, vorzugsweise bis zu 100 %, aus nachwachsenden Rohstoffen hergestellt sein und kann ferner eine Zusammensetzung aus Polyhydroxyalkanoate, Polycaprolactone, Polyester, Polylactide, auch Polymilchsäuren oder PLA genannt, Lignin, Stärke, Cellulose umfassen. Auch können organische Additive, wie beispielsweise Mineralien, natürliches Wachs oder Fasern verwendet werden.

Das erste Gehäuseteil 21 und das zweite Gehäuseteil 22 sind topfförmig mit jeweils einem Boden 24 und einer Wandung 25 ausgebildet, wobei die Wandung 25 in der Längsachse X von dem jeweiligen Boden 24 absteht. Die Wandung 25 und der Boden 24 können symmetrisch, insbesondere rotationssymmetrisch, um die Längsachse X ausgebildet sein.

Das erste Gehäuseteil 21 weist den Einlass 10 und den Auslass 11 auf, wobei der Einlass 10 beispielsweise an der Wandung 25 und der Auslass 11 beabstandet zu dem Einlass 10 an dem Boden 24 angeordnet ist. Weiterhin kann die Wandung 25 des ersten Gehäuseteils 21 einen Zylinderabschnitt 26 und einen Kegelabschnitt 27 aufweisen. Der Zylinderabschnitt 26 ist zwischen dem Kegelabschnitt 27 und dem Boden 24 angeordnet und der Kegelabschnitt 27 weitet den Querschnitt des Innenraums 20 ausgehend von dem Zylinderabschnitt 26 auf. Der Einlass 10 ist vorzugsweise beabstandet zu dem Zylinderabschnitt 26 angeordnet.

Weiterhin kann der Einlass 10 und oder der Auslass 11 eine nicht dargestellte Absperreinrichtung aufweisen. Beispielsweise kann zum Wechseln des Filters 5 der Einlass 10 durch die Absperreinrichtung verschlossen werden.

Das erste Gehäuseteil 21 und das zweite Gehäuseteil 22 sind lösbar und flüssigkeitsdicht verbindbar. Das zweite Gehäuseteil 22 kann von dem ersten Gehäuseteil 21 gelöst werden, wodurch der Innenraum 20 bzw. der Filter 5 zugänglich sind um beispielsweise den Filter 5 zu wechseln.

Die Verbindung zwischen dem ersten Gehäuseteil 21 und dem zweiten Gehäuseteil 22 kann durch eine in Figur 2 angedeutete Schraubverbindung bewerkstelligt werden, wobei die Schraubverbindung einen ersten Gewindeabschnitt 31 und das zweite Gehäuseteil 22 einen mit dem ersten Gewindeabschnitt 31 korrespondierenden zweiten Gewindeabschnitt 32 aufweist.

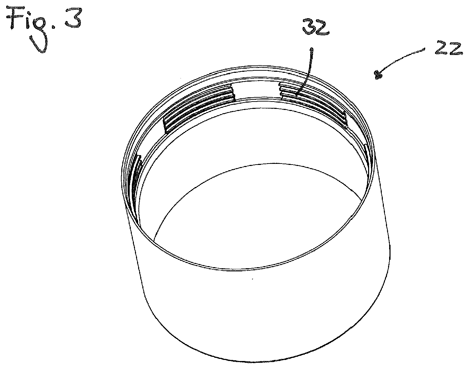

Der erste Gewindeabschnitt 31 und der zweite Gewindeabschnitt 32 weisen jeweils mindestens einem Gewindegang, vorzugsweise mehrere Gewindegänge auf. Der erste Gewindeabschnitt 31 und/oder der zweite Gewindeabschnitt 32 können segmentiert sein (vgl. Figur 3).

Die segmentierte Ausgestaltung des jeweiligen Gewindeabschnitts 31, 32 umfasst mehrere Unterbrechungen des jeweiligen Gewindeabschnitts 31, 32, wobei die Unterbrechungen, vorzugsweise symmetrisch um die Gewindeachse des jeweiligen Gewindeabschnitt 31, 32, welche vorzugsweise mit der Längsachse X des Filtergehäuses 2 zusammenfällt, angeordnet sind. Die Unterbrechung kann vorzugsweise parallel zur der Gewindeachse ausgebildet sein und den jeweiligen Gewindeabschnitt 31, 32 in der Richtung der Gewindeachse vollständig unterbrechen (vgl. Figur 3). Die Unterbrechung bildet in dem jeweiligen Gewindeabschnitt 31, 32 Mantelflächenabschnitte aus, deren Durchmesser in etwa einem Kerndurchmesser des Gewindes entspricht, oder zu dem Kerndurchmesser zurückversetzt ist. Der erste Gewindeabschnitt 31 kann ein Außengewinde und der zweite Gewindeabschnitt 32 ein Innengewinde sein.

Weiterhin ist Figur 2 zu entnehmen, dass die Verbindung zwischen dem ersten Gehäuseteil 21 und dem zweiten Gehäuseteil 22 zweifach abgedichtet ist. In der Längsachse X ist beidseitig zu den ersten Gewindeabschnitt 31 jeweils ein erster Dichtungsabschnitt 33 angeordnet und in der Längsachse X ist beidseitig zu den zweiten Gewindeabschnitt 32 jeweils ein zweiter Dichtungsabschnitt 34 angeordnet. Der erste Dichtungsabschnitt 33 und der zweite Dichtungsabschnitt 34 sind abgesetzt zu dem jeweiligen Gewindeabschnitt 31, 32 angeordnet und sind treppenartig formiert. Durch die treppenartige bzw. abgesetzte Anordnung der Dichtungsabschnitte 33, 34 zu dem jeweiligen Gewindeabschnitt 31, 32 kommen die Gewindeabschnitte 31, 32 beim Lösen oder Verbinden der beiden Gehäuseteile 21,22 nicht in Kontakt.

Der erste Gewindeabschnitt 31 des ersten Gehäuseteils 21 ist zwischen den zwei ersten Dichtungsabschnitten 33, angeordnet, wobei zum besseren Verständnis und zur Unterscheidung die ersten Dichtungsabschnitte 33 mit den Bezugszeichen 33a, 33b gekennzeichnet sind. Der Dichtungsabschnitt 33a - insbesondere der Dichtring dessen - ist auf der dem freien Ende der Wandung 25 zugewandten Seite des ersten Gewindeabschnitts 31 angeordnet und der Dichtungsabschnitt 33b - insbesondere der Dichtring dessen - ist auf der dem Boden 24 zugewandten Seite des Gewindes ersten Gewindeabschnitts 31 angeordnet.

Die ersten Dichtungsabschnitte 33a, 33b des ersten Gehäuseteils 21 umfassen jeweils eine Dichtringanordnung 36 mit einem Dichtring und einer den Dichtring aufnehmenden Nut. Der ersten Dichtungsabschnitt 33a derart abgesetzt angeordnet ist, dass der Dichtring den Kerndurchmesser des ersten Gewindeabschnitts 31 nicht übersteigt. Der erste Dichtungsabschnitt 33b umfasst ebenfalls eine Dichtringanordnung 36 mit einem Dichtring und eine den Dichtring aufnehmenden Nut. Der Durchmesser ist mindestens genauso groß wie der Außendurchmesser des ersten Gewindeabschnitts 31.

Der zweite Gewindeabschnitt 32 des zweiten Gehäuseteils 22 ist zwischen den zwei zweiten Dichtungsabschnitten 34 angeordnet, die nachfolgend zum besseren Verständnis und zur Unterscheidung mit den Bezugszeichen 34a, 34b gekennzeichnet sind. Die zweite Dichtungsabschnitte 34a, 34b des zweiten Gehäuseteils 22 sind bevorzugt als Zylindermantelflächen ausgebildet. Die Mantelflächen sind eingerichtet mit dem jeweiligen korrespondierenden Dichtring der ersten Dichtabschnitte 33a, 33b des ersten Gehäuseteils 21 zusammenzuwirken. Der zweite Dichtungsabschnitt 34a ist auf der dem freien Ende der Wandung 25 zugewandten Seite des zweiten Gewindeabschnitts 32 angeordnet und der Dichtungsabschnitt 34b ist auf der dem Boden 24 zugewandten Seite.

Der zweite Dichtungsabschnitt 34a weist einen Durchmesser auf, der größer oder gleich groß wie der Kerndurchmesser des zweiten Gewindeabschnitts 32 ist. Der zweite Dichtungsabschnitt 34b weist einen Durchmesser auf, der kleiner oder gleich groß wie der Kerndurchmesser des ersten Gewindeabschnitts 31 bzw. ist.

Die Wandungen 24 können an einem freien Ende eine Fase aufweisen, durch die eine Zentrierung beim Zusammensetzen bzw. Verbinden des ersten Gehäuseteils 21 und des zweiten Gehäuseteils 22 erfolgen kann. Weiterhin können zwischen den Übergängen zwischen den Gewindeabschnitten 31, 32 und den Dichtungsabschnitten 33, 34 Verrundungen oder Fasen ausgebildet sein.

Der Filter 5 umfasst gemäß der Figur 2 einen Filterkörper 50, ein erstes Halteteil 61 und eine zweites Halteteil 62. Das erste Halteteil 61 und das zweite Halteteil 62 sind aus einem biologisch abbaubaren Kunststoff hergestellt.

Der Filterkörper 50 ist als hohlzylindrischer Zylinderfilter mit einer zentrischen Durchbrechung 55 ausgebildet und kann aus Block-Aktivkohle hergestellt sein. Der Filterkörper 50 umfasst weiterhin eine äußere Mantelfläche 54 und zwei auf gegenüberliegenden Seiten ausgebildete Stirnseiten 53. Die beiden Stirnseiten 53 sind durch die Durchbrechung 55 miteinander verbunden. Die Mantelfläche 54 kann einen Filtereinlass bilden.

Der Filterkörper 50 wird zwischen dem ersten Halteteil 61 und dem zweiten Halteteil 62 gehalten. Das erste Halteteil 61 bildet eine Filteröffnung 64 aus und das zweite Halteteil 62 verschließt bevorzugt die Durchbrechung 55. Das erste Halteteil 61 und das zweite Halteteil 62 sind lösbar, bevorzugt mittels einer Klemmverbindung bzw. einer kraftschlüssigen Verbindung, mit dem Filterkörper 50 verbunden.

Das erste Halteteil 61 und das zweite Halteteil 62 sind näherungsweise T-förmig ausgebildet und weisen einen Flanschabschnitt 63 und einen Bolzenabschnitt 65 auf. Der Flanschabschnitt 63 ist konfiguriert, an der jeweiligen Stirnseite 53 des Filterkörpers 50 anzulegen. Der Bolzenabschnitt 65 ist konfiguriert, in die Durchbrechung 55 des Filterkörpers 50 einzugreifen, um dort die Verbindung mit dem Filterkörper 50 zu bewerkstelligen.

Wie weiterhin der Figur 2 zu entnehmen ist, ist zwischen dem Filterkörper 50 und dem Bolzenabschnitt 65 des ersten Halteteils 61 und des zweiten Halteteils 62 jeweils mindestens eine Dichtung 66 angeordnet, wobei die Dichtung 66 durch einen Dichtungsabschnitt mit einem Dichtring und einer den Dichtring aufnehmenden Nut an dem jeweiligen Halteteil 61, 62 ausgebildet sein kann.

Die Filteröffnung 64 des ersten Halteteils 61 durchdringt das erste Halteteil 61 bzw. den Bolzenabschnitt 65 vollständig, wodurch durch das erste Halteteil 61 hindurch die Durchbrechung 55 des Filterkörpers zugänglich ist. Das Medium kann durch die Filteröffnung 64 den Filter 5 verlassen.

Zwischen dem ersten Halteteil 61 und dem Filterkörper 50 sind in dem dargestellten Ausführungsbeispiel zwei Dichtungen 66 bzw. Dichtringanordnungen 36 in der Längsachse X beabstandet angeordnet. Darüber hinaus kann das erste Halteteil 61 weitere Dichtungen 67, 68 bzw. Dichtringanordnungen 36 aufweisen, wobei eine Dichtung 67 auf einer äußeren Mantelfläche des Flanschabschnitts 63 angeordnet ist, und zwei weitere Dichtungen 68 auf der von dem Filterkörper 50 abgewandten Seite des Flanschabschnitts 63.

Das zweite Halteteil 62 weist auf der von dem Filterkörper 50 abgewandten Seite einen oder mehrere Füße 69 auf, die von der von dem Bolzenabschnitt 65 abgewandten Seite des Halteteils 62 abstehen.

Zum Zusammensetzen des Filtersystems 1 wird zunächst der Filter 5 mit dem ersten Halteteil 61 voraus in das erste Gehäuseteil 21 eingesetzt. Eine Zentrierung des Filters 5 erfolgt an dem Kegelabschnitt 27 und die Dichtung 67 des ersten Halteteils 61 kommt in Wirkkontakt mit der Wandung 25 bzw. dem Zylinderabschnitt 26 des ersten Gehäuseteils 21. Die Dichtungen 68 kommen in Wirkverbindung mit dem Boden 24 des ersten Gehäuseteils 21. Die Filteröffnung 64 steht in Verbindung mit dem Auslass bzw. mündet in den Auslass 11. Anschließend wird das zweite Gehäuseteil 22 auf das erste Gehäuseteil 31 aufgeschraubt. Dabei wird der Filter 5 zwischen dem ersten Gehäuseteil 21 und dem zweiten Gehäuseteil 22 in der Längsachse X eingeklemmt. Die Dichtungen 67 werden gegen den Boden 24 des ersten Gehäuseteils 21 gedrückt.

Das zu filternde Medium, beispielsweise Wasser oder Trinkwasser, kann durch ein Einlass 10 in den Innenraum 20 des Filtergehäuses 2eingebracht werden die äußere Mantelfläche des Filterkörpers 50 umspülen und durch in Filterkörpers 50 hindurch strömen, wobei der Filterkörpers 50 mögliche Verunreinigungen oder Additive abscheidet. Das gefiltert Medium kann durch die Durchbrechung 55, das erste Halteteil 61 bzw. dessen Filteröffnung 64 zum dem Auslass 11 strömen verlässt dort das Filtergehäuse 1.

### Bezugszeichenliste

- 1: Filtersystem
- 2: Filtergehäuse
- 5: Filter
- 10: Einlass
- 11: Auslass
- 20: Innenraum
- 21: erstes Gehäuseteil
- 22: zweites Gehäuseteil
- 24: Boden
- 25: Wandung
- 26: Zylinderabschnitt
- 27: Kegelabschnitt
- 31: erster Gewindeabschnitt
- 32: zweiter Gewindeabschnitt
- 33: erster Dichtungsabschnitt
- 34: zweiter Dichtungsabschnitt
- 36: Dichtringanordnung
- 50: Filterkörper
- 53: Stirnseite
- 54: Mantelfläche
- 55: Durchbrechung
- 61: erstes Halteteil
- 62: zweites Halteteil
- 63: Flanschabschnitt
- 64: Filteröffnung
- 65: Bolzenabschnitt
- 66: Dichtung
- 67: Dichtung
- 68: Dichtung
- 69: Fuß
- X: Längsachse

## Patentansprüche

1. Filtergehäuse (2) mit einer Längsachse (X) und einem Innenraum (20) für einen Filter (5), aufweisend
- ein erstes Gehäuseteil (21) und ein zweites Gehäuseteil (22),
- einen Einlass (10) und einen Auslass (11),
- wobei das erste Gehäuseteil (21) und das zweite Gehäuseteil (22) lösbar und flüssigkeitsdicht miteinander verbindbar sind,
- wobei der Innenraum (20) den Einlass (10) und den Auslass (11) verbindet, und
- wobei das erste Gehäuseteil (21) und/oder das zweite Gehäuseteil (22) aus einem biologisch abbaubaren Kunststoff hergestellt sind bzw. ist.

2. Filtergehäuse (2) nach Anspruch 1,
**dadurch gekennzeichnet, dass** das erste Gehäuseteil (21) und das zweite Gehäuseteil (22) durch eine um die Längsachse (X) ausgebildete Schraubverbindung lösbar miteinander verbindbar sind, und dass in dem ersten Gehäuseteil (21) ein erster Gewindeabschnitt (31) und in dem zweiten Gehäuseteil (22) ein mit dem ersten Gewindeabschnitt (31) korrespondierender zweiter Gewindeabschnitt (32) ausgebildet ist.

3. Filtergehäuse (2) nach Anspruch 2,
**dadurch gekennzeichnet, dass** der erste Gewindeabschnitt (31) und/oder der zweite Gewindeabschnitt (32) segmentiert sind.

4. Filtergehäuse (2) nach einem der Ansprüche 2 oder 3,
**dadurch gekennzeichnet, dass** in der Längsachse (X) beidseitig zu dem ersten Gewindeabschnitt (31) ein erster Dichtungsabschnitt (33) angeordnet ist und/oder in der Längsachse (X) beidseitig zu dem zweiten Gewindeabschnitt (32) jeweils ein zweiter Dichtungsabschnitt (33) angeordnet ist.

5. Filtergehäuse (2) nach Anspruch 4,
**dadurch gekennzeichnet, dass** die ersten Dichtungsabschnitte (33) und/oder die zweiten Dichtungsabschnitte (34) abgesetzt zu dem Gewindeabschnitt (31, 32) angeordnet sind.

6. Filtergehäuse (2) nach Anspruch 4 oder 5,
**dadurch gekennzeichnet, dass** der erste Dichtungsabschnitt (33) des ersten Gehäuseteils (21) und/oder der zweite Dichtungsabschnitt (34) des zweiten Gehäuseteils (22) eine Dichtringanordnung (36) aufweisen bzw. aufweist.

7. Filtergehäuse (2) nach einem der vorgenannten Ansprüche,
**dadurch gekennzeichnet, dass** das erste Gehäuseteil (21) und/oder das zwei Gehäuseteil (22) topfförmig mit einem Boden (24) und einer von dem Boden (24) in der Längsachse (X) abstehenden Wandung (25) ausgebildet ist

8. Filtergehäuse (2) nach einem der vorgenannten Ansprüche,
**dadurch gekennzeichnet, dass** an dem ersten Gehäuseteil (21) oder dem zweiten Gehäuseteil (22) der Einlass (10) und der Auslass (11) angeordnet ist.

9. Filtergehäuse (2) nach Anspruch 7 oder 8,
**dadurch gekennzeichnet, dass** zwischen dem Boden (24) und dem Auslass (11) die Wandung (25) einen Zylinderabschnitt (26) und/oder einen Kegelabschnitt (27) aufweist.

10. Filter (5) für ein Filtergehäuse (2), insbesondere ein Filtergehäuse (2) nach einem der vorgenannten Ansprüche, aufweisend
- einen Filterkörper (50) und ein erstes Halteteil (61),
- wobei das erste Halteteil (61) eine Filteröffnung (64) ausbildet und lösbar mit dem Filterkörper (50) verbunden ist, und
- wobei das erste Halteteil (61) aus einem biologisch abbaubaren Kunststoff hergestellt ist.

11. Filter (5) nach Anspruch 10,
**dadurch gekennzeichnet, dass** ein aus einem biologisch abbaubaren Kunststoff zweites Halteteil (62) vorgesehen ist, und dass der Filterkörper (50) zwischen dem ersten Halteteil (61) und dem zweiten Halteteil (62) lösbar angeordnet gehalten ist.

12. Filter (5) nach einem der Ansprüche 10 bis 11,
**dadurch gekennzeichnet, dass** der Filterkörper (50) kraftschlüssig an dem ersten Halteteil (61) und/oder dem zweiten Halteteil (62) gehalten ist.

13. Filter (5) nach einem der Ansprüche 10 bis 12,
**dadurch gekennzeichnet, dass** der Filterkörper (50) ein hohlzylindrischer Zylinderfilter mit einer Durchbrechung (55) und zwei Stirnseiten (53) ist.

14. Filter (5) nach einem der Ansprüche 10 bis 13,
**dadurch gekennzeichnet, dass** mindestens eine Dichtung (66) zwischen dem ersten Halteteil (61) und dem Filterkörper (50) und/oder zwischen dem zweiten Halteteil (62) und dem Filterkörper (50) vorgesehen ist.

15. Filter (5) nach Anspruch 13 oder 14,
**dadurch gekennzeichnet, dass** das erste Halteteil (61) und/oder das zweite Halteteil (62) einen Flanschabschnitt (63) und einen Bolzenabschnitt (65) aufweisen bzw. aufweist.

16. Filter (5) nach einem der Ansprüche 10 bis 15,
**dadurch gekennzeichnet, dass** der Filterkörper (50) aus Block-Aktivkohle ist.

17. Filtersystem (1) mit einem Filtergehäuse (2) nach einem der Ansprüche 1 bis 9 und einem Filter (5) nach einem der Ansprüche 10 bis 16, wobei der Filter (5) in dem Innenraum (20) zwischen dem Einlass (10) und dem Auslass (11) und zwischen dem ersten Gehäuseteil (21) und dem zweiten Gehäuseteil (22) geklemmt gehalten ist.
